## Europäisches Patentamt
## European Patent Office
## Office européen des brevets

(19)

(11) Veröffentlichungsnummer: **0 203 353**
**B1**

(12)

# EUROPÄISCHE PATENTSCHRIFT

(45) Veröffentlichungstag der Patentschrift:
14.12.88

(51) Int. Cl.⁴: **F 02 C 9/20, F 02 C 7/18**

(21) Anmeldenummer: **86105447.6**

(22) Anmeldetag: **19.04.86**

(54) Gekühlte Gasturbine mit lastabhängig regelbarer Kühlluftmenge.

(30) Priorität: **20.04.85 DE 3514354**

(43) Veröffentlichungstag der Anmeldung:
**03.12.86 Patentblatt 86/49**

(45) Bekanntmachung des Hinweises auf die Patenterteilung:
**14.12.88 Patentblatt 88/50**

(84) Benannte Vertragsstaaten:
**BE DE FR GB IT NL**

(56) Entgegenhaltungen:
**FR-A-840 427**
**GB-A-755 411**
**GB-A-2 093 532**
**US-A-3 584 458**
**US-A-3 747 335**
**US-A-4 005 572**
**US-A-4 462 204**

(73) Patentinhaber: **MTU MOTOREN- UND TURBINEN-UNION MÜNCHEN GMBH, Dachauer Strasse 665 Postfach 50 06 40, D-8000 München 50 (DE)**

(72) Erfinder: **Weiler, Wolfgang, Robert- Koch- Strasse 11, D-8060 Dachau (DE)**

## Beschreibung

Die Erfindung betrifft eine gekühlte Gasturbine mit lastabhängig regelbarer Kühlluftmenge, wobei ein leitschaufelgeregelter oder ein abblasegeregelter Verdichter vorgesehen ist, und mit einer dem Verdichter nachgeordneten Hochdruckturbine.

Gasturbinen mit hochwertigen Kreisprozessen sind durch hohe Verdichterdruckverhältnisse, hohe Turbineneintrittstemperaturen, niedrige interne Verluste, niedrige Leckagen und niedrige intern über die Struktur transportierte Wärmemengen gekennzeichnet. Während das Verdichterdruckverhältnis primär den spezifischen Brennstoffverbrauch der Maschine bestimmt, ist die Turbineneintrittstemperatur primäre Einflußgröße für die spezifische Leistung, somit für Gewicht und Außenabmessungen der Gasturbine und Teilen ihrer Ausrüstung - wie beispielsweise Zu- und Abluftleitungen.

Überschreitet die Turbineneintrittstemperatur bestimmte Grenzwerte, so ist eine Kühlung bestimmter Baugruppen erforderlich. Diese Grenzwerte liegen bei heute verfügbaren polykristallin erstarrten Nickelbasislegierungen bei ca. 1300° K, bei in naher Zukunft zu wirtschaftlich vertretbaren Kosten verfügbaren gerichtet erstarrten, einkristallin erstarrten oder oxiddispersionsgehärteten Legierungstypen bei 1380 - 1400° K. Die Kühlung von Bauteilen in Gasturbinen erfolgt fast ausschließlich mit Luft, die meist hinter dem Verdichter dem Kreisprozeß entzogen wird, zur Arbeitsleistung in der Turbine größtenteils verloren ist daher die Leistungsdaten der Maschine negativ beeinflußt. So bedeutet beispielsweise bei einer modernen Gasturbine der 1000 kW-Leistungsklasse mit einem Durchsatz von ca. 3,6 kg/s, einem Verdichterdruckverhältnis von ca. 13 und einer Turbineneintrittstemperatur von ca. 1500° K die Einsparung von einem Prozent Kühlluft eine Verbesserung des spezifischen Brennstoffverbrauchs von 0,9 % bei einem gleichzeitigen Anstieg der spezifischen Leistung von 1,9 %. Typische Kühlluftverbrauchsmengen von Gasturbinen der oben genannten Leistungsklasse sind im Falle einstufiger Hochdruckturbinen ca. 1,5 - 2 %, im Falle zweistufiger Hochdruckturbinen ca. 3 - 5 % des Gesamtdurchsatzes. Diese Leistungs- und Verbrauchsnachteile sind auch in allen Teillastpunkten hinzunehmen, wo infolge der Leistungs-Temperaturzuordnung eine Kühlung beispielsweise der Hochdruckturbinenbeschaufelung nicht mehr erforderlich wäre.

Aufgabe der Erfindung ist die Schaffung einer gekühlten Gasturbine mit lastabhängig regelbarer Kühlluftmenge gemäß Oberbegriff des Anspruchs 1, die insbesondere auch in Teillastpunkten gute Leistungs- und Brennstoffverbrauchswerte im Hochdruckteil mit Hilfe einfacher Mittel einrichtet.

Gelöst wird die der Erfindung zugrundeliegende Aufgabe dadurch, daß eine Anordnung zur Mengenregelung für die Kühlluft in der Hochdruckturbine vorgesehen ist, welche an die Regeleinrichtung (en) des Verdichters starr angekoppelt ist.

Bevorzugt ist die Anordnung zur Mengenregelung der Hochdruckturbine mit einem Kühlluftabschaltventil in Form eines Drehschiebers auf der Eingangsseite der Hochdruckturbine vorgesehen, welcher über ein am Vedichtergehäuse befestigtes Gestänge betätigbar ist.

Bei einer Gasturbine mit einem leitschaufelgeregelten Verdichter weist das Gestänge bevorzugt einen zweitseitigen Hebel auf, an dessen einer Hälfte die einzelnen Regeleinrichtungen für zumindest einige Leitschaufeln des Verdichters zwecks Verstellung des Staffelungswinkels in einem bestimmten Drehzahlbereich stetig und in Abhängigkeit von der Verdichterdrehzahl eingreifen und an dessen anderem Ende ein im Verdichtergehäuse gelagerter Schieberstellhebel angelenkt ist, der mit seinem anderen erweiterten Ende in eine Kulisse des Drehschiebers eingreift.

Erfindungsgemäß werden mithin die am Verdichter mittlerer und höherer Druckverhältnisse ohnehin vorhandenen Regeleinrichtungen wie z. B. Abblaseventile oder verstellbare Leitschaufeln bei einer bestimmten Anzahl der Verdichterstufen dazu ausgenutzt, auch den Hochdruchturbinenteil der Gasturbine im Hinblick auf die Kühlluftmenge zu regeln, und zwar in direkter Abhängigkeit der Verdichterregelung infolge der starren Ankopplung. Die Erfindung basiert auf der Erkenntnis, daß die Kühlungserfordernisse bzw. der Kühlluftbedarf für die Beschaufelung im Turbinenbereich etwa denselben Gesetzmäßigkeiten wie die Teillastregelung des Verdichters folgt. Es wird mithin im gekühlten Gasturbinentriebwerk die Kühlluftmenge insgesamt in Abhängigkeit vom Betriebspunkt des Triebwerks geregelt, wobei die Kühlluft nicht hinter dem Verdichter dem Kreisprozeß nach dem Stand der Technik entzogen wird, sondern die Kühlluft des Verdichters selbst für die Kühlung des Hochdruckturbinenteils verwendet und gegebenenfalls in Teillastpunkten vermindert oder gänzlicht gesperrt wird. Dies ist insbesondere bei Gasturbinen von Vorteil, die für Hubschrauberantriebe Verwendung finden, welche sehr häufig im tiefen Teillastbereich betrieben werden. Es ergeben sich deutliche Verbesserungen der Leistungsdaten infolge der gänzlichen oder teilweise vollzogenen Abschaltung der Kühlluft für die Beschaufelung der Hochdruckturbine in einem Teil des Leistungsbereichs, d. h. infolge der Kühlluftmengenregelung entsprechend den tatsächlichen Kühlungserfordernissen.

Eine erfindungsgemäß gestaltete Gasturbine hat gegenüber einer konventionellen nicht nur die Vorteile einer deutlichen Verbesserung des spezifischen Brennstoffverbrauchs, insbesondere im mittleren und tiefen Teillastbereich sowie Anpassung der Kühlluftmenge über die Charakteristik des Absperrorgans an den tatsächlichen Bedarf, sondern darüber hinaus eine weitgehend konstante Temperatur der zu kühlenden Bauteile. Durch den Wegfall eines Teile der hermischen Lastzyklen ergibt sich in vorteilhafter Weise ferner eine Verbesserung der thermischen Lebensdauer der betreffenden Bauteile. Darüber hinaus werden die jeweiligen Teillastpunkte des Triebswerkes bei niedrigen Drehzahlen des Gasgenerators erreicht, wodurch sich eine erhöhte Lebensdauer aller rotierenden Bauteile im Gasgenerator ergibt. Regelungstechnisch stellt sich kein Mehraufwand gegenüber konventioneller Gasturbinen ein.

In einem praktischen Ausführungsbeispiel konnten folgende Werte erzielt werden, und zwar bei einem Basiskreisprozeß eines Gasturbinentriebwerks mit zweistufiger Hochdruckturbine:

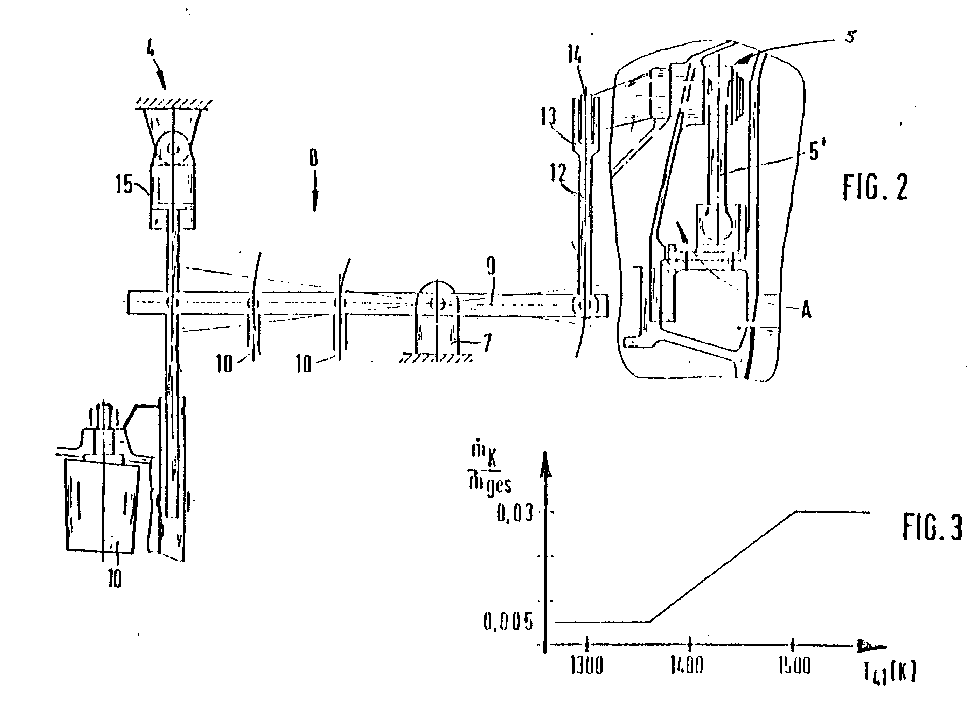

Kühlluftverbrauch in der Hochdruckturbine: 3 % (davon 2 % für Stufe 1, 1 % für Stufe 2),
- Kühlluftmengenregelung $\dot{m}_K/\dot{m}_{ges}$ in Abhängigkeit der Turbineneintrittstemperatur $T_{41}$ gemäß der Gesetzmäßigkeit der Fig. 3.

Eine besonders vorteilhafte Weiterbildung der Erfindung kennzeichnet sich durch die Merkmale des Anspruchs 4. Im Zuge einer weiteren Ausgestaltung der Erfindung kann mithin zusätzlich die Kühlluftmengenregelung in Abhängigkeit der Turbineneintrittstemperatur gebracht werden, indem ein von der für Regelungszwecke ohnehin zu messenden Verdichtereintrittstemperatur angesteuertes Korrekturglied das von der Leitschaufelstellung angesteuerte Kühlmittelventil im Sinne einer Nullpunktverschiebung der Ventilcharakteristik beeinflußt.

Während die ausschließlich drehzahlabhängige Regelung des Kühlmitteldurchsatzes für die Mehrzahl aller in Bodennähe betriebenen Gasturbinen (z. B. Hubschrauber-, Marine- und Industriegasturbinen) die beschriebenen Verbesserungen bringt, berücksichtigt die vorgenannte Ausführungsform der Erfindung die übliche Rating-Struktur von Luftfahrtgasturbinen, die auch in größeren Höhen eingesetzt werden. Charakteristikum derartiger Rating-Strukturen ist die Begrenzung der Turbineneintrittstemperatur von der Verdichtereintrittstemperatur, die ihrerseits eine Funktion von Flughöhe und Fluggeschwindigkeit ist.

Da üblicherweise das Verhältnis Turbineneintrittstemperatur/Verdichtereintrittstemperatur für die einzelnen Lastfälle (= ratings), beispielsweise für Startleistung, maximale Dauerleistung und dergleichen im wesentlichen konstant bleibt, resultiert aus einer steigenden Flughöhe und somit fallender Umgebungs- und somit Verdichtereintrittstemperatur eine entsprechende Zurücknahme der Turbineneintrittstemperatur.

Dies hat zur Folge, daß die Bauteiltemperaturen der "heißen" Baugruppen zurückgehen und folglich die zur Aufrechterhaltung einer bestimmten Bauteillebesdauer erforderliche Kühlluftmenge kleiner wird. Dabei kann sogar der Grenzfall auftreten, daß auf eine Bauteilkühlung in diesen Betriebszuständen gänzlich versichtet werden kann.

Die Erfindung wird nachfolgend anhand eines Ausführungsbeispiels unter Bezugnahme auf die begefügte Zeichnung näher erläutert; es zeigen:

Fig. 1 einen schematischen Axialteilschnitt einer gekühlten Gasturbine,
Fig. 2 den Kopplungsteil der Kühlluftregelung zwischen Verdichterende und Hochdruckturbinenanfang in größerer Einzelheit und
Fig. 3 die Gesetzmäßigkeit der Kühlluftmengenregelung in Abhängigkeit der Turbineneintrittstemperatur.

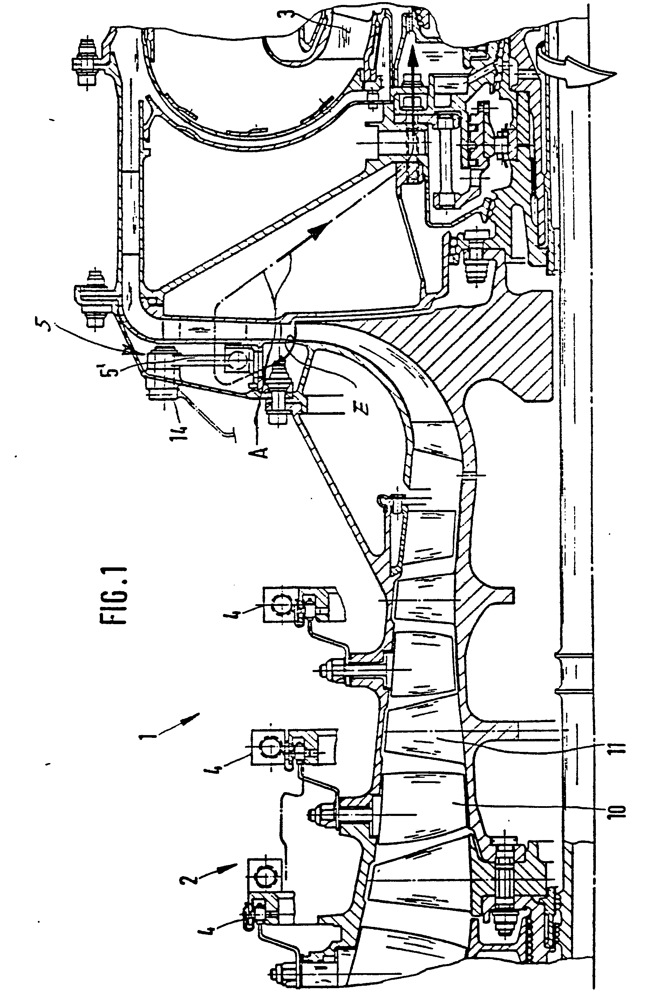

In Fig. 1 ist ein Ausschnitt eines Gasturbinentriebwerks 1 mit einem leitschaufelgeregelten Verdichter 2 gezeigt, dem eine Hochdruchturbine 3 nachgeordnet ist. Der Weg der Kühlluft ist durch A gekennzeichnet. Insbesondere verläuft der Weg der Kühlluft A von der Entnahmestelle E hinter dem Laufrad der radialen Endstufe des Verdichters 2 bis zu den Vordralldüsen vor der ersten Stufe der Hochdruckturbine 3. In Fig. 1 ist das Kühlluftventil 5 in Form eines Drehschiebers 5' gezeigt, welches mit den Regeleinrichtungen 4 des Verdichters 2 starr verkoppelt ist, und zwar in einer Weise, wie dies im einzelnen der Fig. 2 zu entnehmen ist.

Gemäß Fig. 2 umfaßt die Anordnung zur Mengenregelung für die Kühlluft A in der Hochdruckturbine 3 ein Gestänge 8 mit einem zweiseitigen Hebel 9, an dessen einer Hälfte die einzelnen Regeleinrichtungen 4 für zumindest einige Leitschaufeln 10 des Verdichters 2 zwecks Verstellung des Staffelungswinkels in einem bestimmten Drehzahlbereich stetig und in Abhängigkeit von der Verdichterdrehzahl eingreifen. Am anderen Ende des zweiseitigen Hebels 9 ist ein am Verdichtergehäuse 7 gelagerter Schieberstellhebel 12 angelenkt, der mit seinem anderen erweiterten Ende 13 in eine Kulisse 14 des Drehschiebers 5' eingreift. Der zweiseitige Hebel 9 wird durch einen hydraulischen Stellzylinder 15 betätigt.

Bei der prinzipiellen Darstellung wurde auf die Berücksichtigung von Einstellelementen wie beispielsweise Spannschlösser oder Exzenterbuchsen aus Gründen einer vereinfachten Darstellung bewußt verzichtet.

Durch die Erfindung stellt sich in einem praktischen Ausführungsbeispiel eine Kühlluftmengenregelung $\dot{m}_K/\dot{m}_{ges}$ in Abhängigkeit der Turbineneintrittstemperatur $T_{41}$

ein, wie dies im einzelenen in Fig. 3 graphisch veranschaulicht ist (Kühlluftverbrauch Hochdruckturbine: 3 % (davon 2 % für Stufe 1, 1 % für Stufe 2).

**Patentansprüche**

1. Gasturbinentriebwerk mit einem verdichter (2), dem eine Hochdruckturbine (3) nachgeordnet ist, mit einer Entnahmestelle für Kühlluft am verdichterende und mit einem zwischen der Entnahmestelle und vor der Hochdruckturbine (3) angeordneten Kühlluftabschaltventil (5) für eine lastabhängig geregelte, der Hochdruckturbine (3) zuzuführenden Kühlluftmenge, dadurch gekennzeichnet daß

- verstellbare Leitschaufeln (10) oder Abblaseventile als Regelungseinrichtungen des Verdichters (2) vorgesehen sind, an die das Kühlluftabschaltventil (5) direkt mechanisch angekoppelt ist.

2. Gasturbinentriebwerk nach Anspruch 1, dadurch gekennzeichnet, daß das Kühlluftabschaltventil (5) einen Drehschieber (5') aufweist, der über ein am Verdichtergehäuse (7) angeordnetes Gestänge (8) betätigt ist.

3. Gasturbinentriebwerk nach Anspruch 1 oder 2, wobei eine aus verstellbaren Leitschaufeln (10) bestehende Regelungseinrichtung des Verdichters (2) vorgesehen ist, dadurch gekennzeichnet, daß das Gestänge (8) einen am Verdichtergehäuse (7) verstellbar gelagerten Hebel (9) aufweist, an dessen einer Seite einzelne Stelleinrichtungen (4) für zumindest einige Leitschaufeln (10) angreifen und an dessen der anderen Seite zugehörigem Ende ein Schieberstellhebel (12) angelenkt ist, der mit seinem erweiterten übrigen Ende (13) in eine Kulisse (14) des Drehschiebers (5') eingreift.

4. Gasturbinentriebwerk nach Anspruch 2 oder 3, dadurch gekennzeichnet, daß ein von der Verdichtereintrittstemperatur angesteuertes Korrekturglied vorgesehen ist, welches das von der Leitschaufelverstellung oder der Abblasemenge des Verdichters (2) angesteuerte Kühlluftabschaltventil (5) im Sinne einer Nullpunktverschiebung der Ventilcharakteristik beeinflußt.

**Claims**

1. Gas turbine propulsion unit with a compressor (2) on the downstream side of which there is a high-pressure turbine (3) and which has a cooling air draw-off point at the compressor end and, disposed between the draw-off point and upstream of the high pressure turbine (3), a cooling air shut-off valve (5) for a load-dependently controlled quantity of cooling air which is to be fed to the high pressure turbine (3), characterised in that

- as devices for controlling the compressor (2), adjustable guide vanes (10) or blow-off valves are provided to which the cooling air shut-off valve (5) is mechanically and directly coupled.

2. Gas turbine propulsion unit according to Claim 1, characterised in that the cooling air shut-off valve (5) has a rotary slide valve (5') actuated via a linkage (8) disposed on the compressor housing (7).

3. Gas turbine propulsion unit according to Claim 1 or 2, a control device consisting of adjustable guide vanes (10) being provided for the compressor (2), characterised in that the linkage (8) has a lever (9) mounted for adjustment on the compressor housing (7), one side of the lever (9) being engaged by individual positioning means (4) for at least some guide vanes (10), while the end associated with the other side has articulated on it a slide valve positioning lever (12), the widened-out other end (13) of which engages a sliding block (14) on the rotary slide valve (5').

4. Gas turbine propulsion unit according to claim 2 or 3, characterised in that a correcting member is provided, controlled by the compressor inlet temperature, which influences the cooling air shut-off valve (5), which is controlled by the guide vane setting or the blow-off quantity setting of the compressor (2), in such a way as to displace the zero point of the curve representing the valve characteristics.

**Revendications**

1. Installation à turbine à gaz comportant un compresseur (2) en aval duquel est placée une turbine à haute pression (3), avec une soupape de déconnexion de l'air de refroidissement (5) placée entre la prise pour l'air de refroidissement à l'extrémité du compresseur et avant la turbine à haute pression (3) pour un débit de l'air de refroidissement à apporter à la turbine à haute pression en fonction de la charge, caractérisée en ce que des aubes réglables (10) ou des soupapes de fuite sont prévus comme dispositifs de régulation du compresseur (2) sur lesquels la soupape de déconnexion d'air de refroidissement est directement couplée mécaniquement.

2. Installation à turbine à gaz selon la revendication 1, caractérisée en ce que la soupape de déconnexion de l'air de refroidissement (5) comporte un tiroir rotatif (5') qui est actionné par une bielle (8) placée sur le carter de compresseur (7).

3. Installation à turbine à gaz selon la revendication 2 ou 3, où est prévu un dispositif de régulation du compresseur (2) constitué par des aubes directrices réglables (10), caractérisée en ce que la bielle (8) comporte un levier (9) supporté de façon réglable sur le carter de compresseur (7), sur un des côtés duquel s'engagent des dispositifs individuels de positionnement (4) pour au moins quelques aubes directrices (10) et sur l'autre côté duquel s'articule à l'extrémité correspondante, un levier de positionnement coulissant (12) qui s'engage, par son extrémité élargie restante, dans une coulisse (14) du tiroir rotatif (5').

4. Installation de turbine à gaz selon la revendication 2 ou 3, caractérisée en ce qu'on prévoit un élément de correction commandé par la température à l'entrée dans la turbine, qui agit sur la soupape de déconnexion d'air de refroidissement commandé par la position des aubes directrices ou le débit de fuite du compresseur (2) dans le sens d'un déplacement du point zéro de la caractéristique de la soupape.

FIG.1

FIG. 2

FIG. 3

$$\frac{\dot{m}_K}{\dot{m}_{ges}}$$

0,03

0,005

1300  1400  1500  $T_{41}[K]$

0 203 353